# EUROPEAN PATENT APPLICATION

(11) **EP 3 702 398 A1**
(43) Date of publication of application: **02.09.2020**
(21) Application number: 19159517.2
(22) Date of filing: 26.02.2019
(51) Int. Cl.: C08J 5/04, B32B 5/00, B32B 27/00, C08J 7/06, A62C 3/06, B65D 88/34

(54) **FLOATING ROOF FOR TANKS, FIRE RESISTANT COATING THEREOF, AND METHOD FOR THEIR MANUFACTURE**

(71) Applicant: World Link Industry Engineering GmbH, 16303 Schwedt (DE)
(72) Inventor: HAJNAJ, Joanna, N43JP London (GB)
(74) Representative: Stolmár & Partner Patentanwälte PartG mbB

(57) **Abstract**

The present invention relates to floating roofs for tanks that are used for storage of flammable liquids, such as petroleum or refinery products such as diesel, kerosene, gasoline, etc. In one aspect, the present invention concerns a method for forming a fire retardant coating of a floating roof, and a floating roof obtainable thereby. In another aspect, the present invention relates to improvements in structure of a floating roof. The floating roof tank may be a seamless composite floating roof tank for refineries.

## Description

The present invention generally relates to floating roofs for tanks that are used for storage of flammable liquids, such as petroleum or refinery products such as diesel, kerosene, gasoline, etc. In one aspect, the present invention concerns a method for forming a fire retardant coating of a floating roof, and a floating roof obtainable thereby. In another aspect, the present invention relates to improvements in structure of a floating roof. The floating roof tank may be a seamless composite floating roof tank for refineries.

Large storage tanks for refineries typically store volatile and flammable liquids like gasoline, naphtha, kerosene, diesel, and crude oil. Evaporative losses are a concern for such storage tanks, as they are economically and environmentally undesirable. In order to minimize or avoid the formation of a vapor phase above the liquid level and to thereby minimize evaporative loss, a floating roof can be used. Floating roofs are for instance described in WO 91/15418 and WO 90/08076. Floating roofs are also commercially available, e.g. the HMT® Deckmaster™.

A floating roof rises and falls with the liquid level inside the tank, thereby decreasing the vapor space above the liquid level as it remains in full contact with the stored liquid and prevents evaporative losses. A floating roof can be used in addition to (internal floating roof) or in lieu of (external floating roof) the fixed roof and structure. Floating roofs are considered a safety requirement as well as a pollution prevention measure for many industries including petroleum refining.

Modern composite floating roofs such as the Deckmaster™ by HMT Inc. generally have a composite layer structure. Such floating roofs comprise at least a bottom face layer (oriented towards or in contact with the stored liquid) that is typically made from resin with reinforcement fibers, a core, and an upper layer made from a resin with reinforcement fibers. The upper layer may be the outermost or top layer, i.e. the layer that is in contact with the surrounding air under a fixed roof in case of an internal floating roof, or that is in contact with the open atmosphere in case of a on external floating roof. The layers are arranged in a sandwich structure.

As many of the liquids typically stored in large storage tanks is either flammable itself or emits flammable gases, fire safety measures have to be put in place.

Floating roofs comprised in the art are manufactured by placing mats of reinforcing fibers on or into a mold, and subsequently the fiber mats are impregnated with a resin composition. These fiber mats have to be placed in an overlapping manner so as to avoid potential weak spots in the finished structure after curing due to insufficient reinforcement. These overlaps cause the manufactured surfaces to be uneven. This requires that a relatively soft material is used for the core, for example a pre-fabricated polyethylene foam, which is able to adapt to and outbalance the uneven surface. Otherwise air pockets can remain in the sandwich-structure which can negatively impact the structural integrity of the floating roof. Also, the resulting layer of fiber-reinforced resin material exhibits differences in physical properties such as strength and/or flexibility over the area covered thereby due to the structural inhomogeneities caused by overlapping and non-overlapping regions of the fiber mats, which can be the origin of defects or cracks, in particular upon continued use, e.g. due to expansion and retraction caused by a change in temperature over day-night cycles and also over the seasons in case of an external roof.

While thus potentially being detrimental to a homogeneous structure and/or causing a reduced lifespan of the roof, the need to provide for an overlap of fiber mats further also increases costs, and the need to use a soft material for the core limits the choice of suitable materials. Soft materials further are not generally available from recycling material, and may lead high costs. Soft materials also have inherent low structural integrity, so that the contribution of the soft core material to the overall strength of the floating roof is limited.

In another aspect, due to the inherent flammability of the stored liquid and the potential fire hazard of the surrounding area (such as in refineries), the floating roof is desired to include a fire-retardant upper layer. This is desired as spills that cause a potential fire hazard may occur, which may in turn lead to a local fire on the surface. It is easily recognizable that catastrophic consequences may incur in case a fire on the surface of the floating roof was able to destroy the roof and to set the stored liquid on fire, considering the large volume of such tanks of up to

However, fire-retardant or fire-retardant properties are not the only requirement for such upper layers of floating roofs.

In order to withstand the influence of the environment, they should generally possess stability against UV irradiation. They also need to have high hardness, cohesiveness and structural integrity in order to avoid damages by accidentally falling objects or by load imposed by workers or machinery during maintenance and/or filing operations. They should also generally be made from a material that is not highly insulating (e.g. having a volume resistivity of 10¹⁷ Ω cm or more) in order to avoid static charge.

Currently existing floating roofs therefore comprise a fire-retardant upper layer that is made from a fiber-reinforced resin. However, due to the inherent flammability of organic resins, generally further measures need to be taken in order to obtain fire-retardant properties, such as inclusion of brominated flame retardants. Such components however lead to a high environmental burden and are costly to produce. Also, the fire-retardant properties of such upper layers may still not be satisfactory even when flame retardants are added.

Also, fiber-enforced resins may not always have the required structural integrity. A further downside of the use of such fiber-enforced resin layers is that they may require significant time for their manufacture, and separate steps for laying fiber mats and impregnating them with resin may be required. A resin also typically is based on organic material that can only be produced under environmental burden due to the use of fossil resources (petroleum). During the manufacturing process, the resin components are also typically present in a volatile and flammable organic solvent that evaporates during the hardening process, thereby also causing damages to the environment and causing a potential fire hazard during the manufacturing process.

The problem underlying the present invention was therefore to provide a novel layer of a floating roof for tanks that can overcome some or all of the drawbacks of the prior art and which is fire-retardant as well as a method for its manufacture.

It is specifically an object to provide a layer of a floating roof for tanks that has improved fire-retardant or fire-retardant properties. It is also an object to provide a layer of a floating roof for tanks which is fire-retardant and which can be produced with lower environmental burden. It is a further object of the present invention to provide a layer of a floating roof for tanks which is fire-retardant and has a high structural integrity specifically a floating roof that can match the structural integrity of existing floating tanks at lower thickness.

It is still a further object of the present invention to provide a floating roof that is fire-retardant /fireproof and thus reduces both the danger of destruction by fire and the extent of the required safety measures.

It is a further object to improve the structure and the method of manufacturing of the floating roof so as to be able to improve the structural integrity.

In the present invention, all parameters and product properties relate to those measured under standard conditions (25 °C, 105 Pa) unless stated otherwise. All physical parameters can be determined by standard methods in the art and/or the following detailed description. In case of discrepancy between a standard method and a method described below, the present description prevails.

The term "fire-retardant" or "fireproof" means that the material shall provide flame spread properties in accordance with ASTM E84 flame spread Class A rating or a Flame Spread Index (FSI) ranging from 0 up to 25.

The term "comprising" is used in an open-ended manner and allows for the presence of additional components or steps. It however also includes the more restrictive meanings "consisting essentially of" and "consisting of".

Whenever a range is expressed as "from x to y", or the synonymous expression "x - y", the end points of the range (i.e. the value x and the value y) are included. The range is thus synonymous with the expression "x or higher, but y or lower".

As used herein, the indefinite article "a" indicates one as well as more than one and does not necessarily limit its reference noun to the singular.

The term "about" means that the amount or value in question may be the specific value designated or some other value in its neighborhood, generally within a range of ±5% of the indicated value. As such, for instance the phrase "about 100" denotes a range of 100 ±5.

The term and/or means that either all or only one of the elements indicated is present. For instance, "a and/or b" denotes "only a", or "only b", or "a and b together". In the case of "only a" the term also covers the possibility that b is absent, i.e. "only a, but not b".

The term "layer" denotes a material having a physical shape in which the extension in each of two directions that are orthogonal to each other (x,y) exceeds that in a third direction (z) that is orthogonal to each of the directions x any y by a factor of 10 or more, such as 100 or more, 500 or more or 1000 or more. The term "layer" also includes a sheet as a specific form of a layer.

The term "tex" expresses the weight of a fiber material, such as glass fiber or a ceramic fiber, which may be determined by any standard method usual in the art, e.g. according to ISO/DIS 13922 - 2000. In the present invention, reference is made to the nominal bare glass, so that the tex value does not include the sizing.

The terms "on" and "above", as used in connection with the present invention, generally denote that a material, such as a layer, is present on or above another material, such as a layer, with or without any intervening elements. If a material or layer is provided "directly on" or "directly above" another material, no intervening elements are present, and the respective materials or layers are in direct contact. The terms "on" and "above" includes the meaning "directly on", except the context clearly indicates otherwise.

The term "under" or "below", as used in the present invention, generally denotes that a material, such as a layer, is present under or below another material, such as a layer, with or without any intervening elements. If a material or layer is provided "directly under" or "directly below" another material or layer, no intervening elements are present, and the respective materials or layers are in direct contact. The terms "under" and "below" include the meanings "directly under" and "directly below", except the context clearly indicates otherwise.

In the present invention, directional terms such as "upper", "lower", "bottom", "above", "below" etc., relate to the direction of gravity. For a floating roof, this means that the respective terms relate to the position of the element referred to when installed as a floating roof of a tank. The bottom surface is thus the surface that is oriented towards space where a liquid is or is to be stored, and the top surface is the surface of the floating roof opposite the side that is oriented towards the storage space where a liquid is or is to be stored.

In the context of the present invention, the term fire retardant means that a substrate, for example a structure, component, layer , material etc. becomes by fire retardant by application to its surface and/or outer surface of a chemical entity, for example a chemical substance, composition or formulation. The application may or may not transform the chemical nature of the substrate, i.e. a reaction between the chemical entity may or may not take place to confer fire retardant properties to the substrate. If a reaction takes place, then the substrate may also become fire resistant.

In contrast to the term fire retardant, the term fire resistant is usually understood as being an inherent property of a material.

The problem underlying the present invention is solved by an floating roof with at least two layers arranged in a sandwich structure for storage tanks comprising a top layer (FL) comprising a mixture or a reaction product of
a. one or more selected from inorganic salts and inorganic oxides comprising one or more phosphate(s);
b. one or more selected from inorganic salts, inorganic oxides and inorganic hydroxides comprising at least one of an earth alkaline oxide and an earth alkaline hydroxide;
c. inorganic fibers.
and which is fire-retardant.

The floating roof may be an external or an internal floating roof so that the present invention can be applied to a huge structural variety of tanks.

Preferably, the floating roof has a floating roof structure comprising further a bottom layer (BL), a core (C), and an upper layer (UL) arranged in a sandwich structure, whereby the bottom layer (BL) is made from a fiber reinforced resin material having a uniform distribution of fibers and resin material and/or a uniform thickness.

In a further specific embodiment, the upper layer (UL) is made from a fiber reinforced resin material having a uniform thickness and/or a uniform distribution of fibers and resin material. In a preferred embodiment, the fiber reinforced resin material is a vinyl ester resin.

Preferably, the core (C) comprises or in another specific embodiment consists of polyethylene terephthalate, which is optionally in the form of a foam.

In a further specific embodiment of the invention, the bottom layer (BL) and/or the upper layer (UL) have a content of reinforcement fibers from 5 to 50 % by weight, relative to the total weight of the respective composition, preferably wherein the bottom layer (BL) and the upper layer (UL) have a content of reinforcement fibers from 30 to 40% by weight, relative to the total weight of the respective composition.

The problem underlying the invention is further solved by a method of forming a fire-retardant layer (FL) of a floating roof for tanks, the method comprising applying a mixture prepared from a set of components comprising the following components A, B and C on a substrate surface, namely
A a first aqueous composition (10) comprising water and one or more selected from inorganic salts and inorganic oxides comprising one or more phosphate(s), the first aqueous composition having a pH at 20°C of from 1.0 to 6.5;
B a second aqueous composition (20) comprising water and one or more selected from inorganic salts, inorganic oxides and inorganic hydroxides comprising at least one of an alkaline or earth alkaline oxide and an alkaline or earth alkaline hydroxide, the second aqueous composition having a pH at 20°C of from 7.5 to 14.0; and
C inorganic fibers (30).

The mixture is preferably prepared by mixing the components A and B in a weight ratio of A:B within the range of about 0.5:2 to 2:0.5, preferably about 1:2 to 2:1, more preferably about 1.5:2 to 2:1.5, such as about 1:1, and/or wherein the mixture is prepared such that the content of inorganic fibers C in the mixture is from 5 - 25% by weight, relative to the total weight of the mixture.

In a preferred embodiment of the method according to the invention, the aqueous compositions A and/or B has/have a water content from 10 to 60 % by weight, relative to the total weight of the respective composition, such as from 15 - 50% by weight.

In a further embodiment of the method, the one or more phosphate(s) present in Component A is/are selected from the group consisting of an alkaline phosphate, a monoalkaline dihydrogen phosphate, an dialkaline monohydrogen phosphate, an earth alkaline phosphate and an earth alkaline hydrogen phosphate, and is more preferably selected from the group consisting of sodium phosphate, monosodium dihydrogen phosphate, disodium monohydrogen phosphate, potassium phosphate, monopotassium dihydrogen phosphate, dipotassium monohydrogen phosphate, calcium phosphate, calcium hydrogen phosphate, magnesium phosphate, magnesium hydrogen phosphate, and combinations thereof.

The earth alkaline oxide or hydroxide in the aqueous composition B is selected from calcium oxide, calcium hydroxide, magnesium oxide, magnesium hydroxide, and combinations thereof.

It is further preferred that the amount of the one or more phosphate(s) present in the aqueous composition of Component A is 20% by weight or more, relative to the total weight of the respective composition;

The amount of the at least one of an earth alkaline oxide and an earth alkaline hydroxide present in the aqueous composition B is 20% by weight or more, relative to the total weight of the respective composition.

In another preferred embodiment, the composition A comprises, besides the one or more phosphate(s), one or more of inorganic salts and inorganic oxides other than phosphates. The composition B comprises, besides the at least one of an earth alkaline oxide and an earth alkaline hydroxide, one or more of inorganic salts, inorganic oxides or inorganic hydroxides other than an earth alkaline oxide and an earth alkaline hydroxide.

These one or more of inorganic salts and inorganic oxides other than phosphates in composition A and/or the one or more of inorganic salts, inorganic oxides or inorganic hydroxides other than an earth alkaline oxide and an earth alkaline hydroxide present in composition B includes preferably one, two, three, four, five, six or more selected from the group consisting of silicon oxide, aluminum oxide, aluminum hydroxide, aluminum silicates such as perlite, vermiculite, titanium oxide of amorphous, anatase or rutil type, titanium hydroxide, sodium oxide, sodium hydroxide, potassium oxide, and potassium hydroxide. These one or more of inorganic salts and inorganic oxides other than the one or more phosphate(s) present in composition A and/or the one or more of inorganic salts, inorganic oxides or inorganic hydroxides other than an earth alkaline oxide and an earth alkaline hydroxide present in composition B is/are present in an amount of 5 to 25 % by weight, relative to the total weight of the composition A or B, respectively.

It is further preferred that the inorganic fibers C are selected from glass fibers, ceramic fibers and mineral fibers, optionally having a tex of 1000 or to 3000 g/km.

The amount of the inorganic fibers C is 5 to 25% by weight, relative to the total weight of A, B and C.

In further preferred embodiments, the substrate surface on which the mixture is applied includes silicon oxide, preferably in particulate form.

The substrate per se is preferably formed from a fiber-reinforced material comprising an organic resin, such as a vinyl ester resin, a polyester resin or an epoxy resin.

In another embodiment the invention relates to a fire-retardant top layer (FL), which is obtainable by the method described above.

In still another embodiment, the invention contemplates the use of a set of components comprising the components A, B and C as defined above for forming a fire-retardant top layer (FL) of a floating roof for tanks.

In still a further embodiment, the invention relates to a floating roof with a sandwich structure for tanks having a fire-retardant top layer (FL) and wherein the floating roof is obtainable by the method described below.

The problem underlying the invention is further solved by a method of producing a floating roof of a floating roof tank, the method comprising the steps of
i. Forming a mold inside a tank housing,
ii. Forming at least a bottom layer (BL), a core (C) and an upper layer (UL) to form a sandwich structure; and
iii. Forming a fire-retardant coating (FL) on the upper layer (UL) according to the method as described above.

Preferably, the bottom layer (BL) is formed from a fiber-reinforced resin composition having a uniform distribution of fibers and resin components and/ or has a uniform thickness.

It is further preferred that the formation of the bottom layer (BL) includes applying a composition including a resin component, preferably a vinyl ester resin component, and reinforcing fibers using an application device comprising or connected to a reservoir for the resin and for fiber material, respectively, and wherein optionally the fiber length of the fiber material present in the applied composition ranges from approximately 1 cm up to approximately 3 cm, and wherein the application is preferably conducted using a chopper gun.

In one embodiment, the method of manufacturing a floating roof of a floating roof tank comprises carrying out the following steps inside the tank:
First, a scaffolding (or mold) having a circular flat upper surface and a peripheral sidewall extending upwardly from the circular flat upper surface is constructed. Secondly, the bottom layer BL is formed from a mixture of resin and reinforcement fibers applied onto the flat upper surface and the sidewall of the scaffolding and subsequently the mixture of resin and reinforcement fibers is allowed to harden. This application of a mixture of resin and reinforcement fibers may be repeated until the bottom layer BL has reached a desirable thickness. Additionally and optionally, a woven or nonwoven veil can be placed in the mold before forming the bottom layer BL to prohibit reinforcement fibers from sticking out from the bottom surface of the bottom layer, or can be placed on the bottom layer before the core is formed. The veil may be impregnated with a resin material.

In the next step the core C is constructed from a suitable material such as panels, e.g. comprising PET (Polyethylene terephthalate), which are placed on essentially the entire upper surface area of the bottom layer BL. These panels are preferably placed as a single layer of foam panels with a desirable height. Then, a mixture of a resin with reinforcement fibers is applied onto the core panels to form the upper layer UL, which is allowed to harden. The upper layer UL is then optionally coated with silica, e.g. quartz sand. Subsequently, a fire-retardant upper layer FL is formed. In one embodiment, this can be achieved by applying a mixture obtained by mixing the components A, B and C, as described below, and applying the mixture. In a preferred embodiment, the fire-retardant upper layer FL can be the uppermost layer, which can optionally be further covered by a layer of fire-retardant or in some embodiments even a fire-resistant paint (e.g. based on silicate).

The present invention thus concerns improvements in at least two aspects, one being the provision of a novel and improved fire-retardant upper layer of a floating roof for tanks and a method for its manufacture, another one being directed to an improvement of the core structure relying on the formation of a bottom layer by coating a mixture comprising both fibers and resin. These aspects can be combined, but each of these aspects can also be realized separately.

In the following, the present invention is described in more detail making reference to the figures which are meant to describe specific embodiments of the present invention without being understood to limit the scope of the invention.
Fig. 1 is a sectional view of a floating roof structure according to one embodiment.
Fig. 2a -2e show the steps for manufacturing a floating roof structure according to one embodiment.
Fig. 3a shows the application of a composition for forming a fire retardant layer on a substrate surface that is part of a floating roof construction according to one embodiment.
Fig. 3b shows the formation of a fire retardant layer on a floating roof with the fire-retardant layer being partially finished.

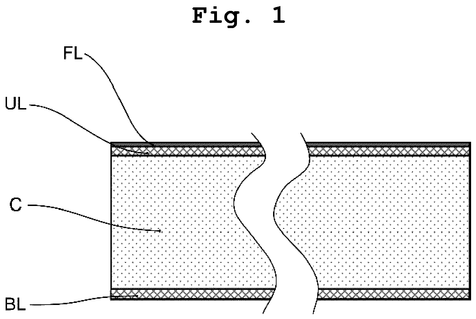

Fig. 1 depicts a floating roof according to one aspect of the present invention, comprising a bottom layer BL, a core C, and an upper layer UL arranged in a sandwich structure. In this embodiment, a flame resistant top layer FL is provided on top of the upper layer UL, and the upper layer UL serves as substrate for the flame resistant top layer (FL9.

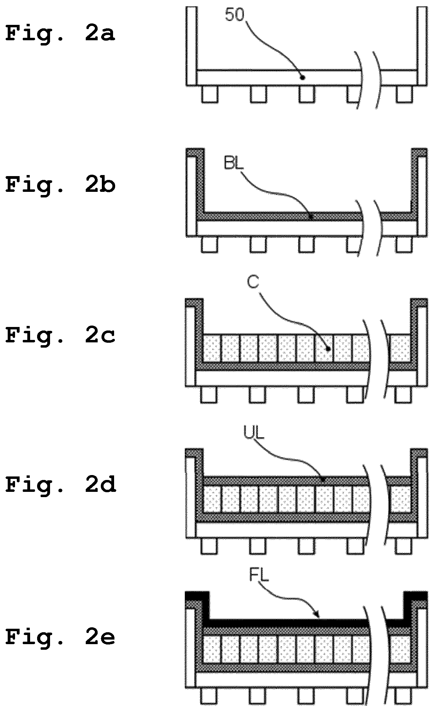

The steps for manufacturing a floating roof according to one embodiment of the present invention are depicted in Fig. 2a to Fig. 2f. First a mold 50 is constructed within the interior of a tank (not shown), see Fig. 2a. The mold is typically constructed from melamine coated boards. The mold comprises a flat upper surface and a circumferential sidewall inside the tank. To ensure that the top surface of the mold has an even structure and that no resin can flow through the gaps between the boards, tapes (not shown) may be provided to cover the gaps.

Then the bottom layer BL made from a fiber-reinforced resin material is provided on the mold 50, e.g. using a chopper gun that sprays chopped reinforcing fibers and a resin onto the mold. After a bottom layer has been applied, it may be mechanically de-aired, for example by use of rolls that are rolled over the layer, and allowed to harden. Subsequently the process may be repeated until the bottom layer BL has reached the desired thickness, e. g. 4 to 8 mm, as depicted in Fig. 2b.

The lower part of the bottom layer that may be in contact with the stored liquid of the tank is sprayed using a resin composition, which optionally comprises an additive such as graphite in an amount of up to 10% by weight in order to render the bottom layer electrically conductive, to thereby avoid static charge and potential spark formation that may cause ignition of the stored liquid. It is to be noted that the bottom layer BL may also cover the circumferential sidewalls of the mold 50, and may thus also form the sidewalls of the floating roof.

Fig. 2c shows the core, which in one embodiment may be formed by polyethylene terephthalate (PET) foam panels that are being placed on the upper surface of the bottom layer BL, optionally in a staggered formation, after the bottom layer BL is finished. The panels forming the core may be cut to fit to the typically circumferential sidewall created by the bottom layer BL inside the mold and thus the shape of the tank.

As shown in Fig. 2d, on top of the core C a layer of resin with fiber glass reinforcements is formed that is denoted as the upper layer UL. Several sub-layers may be added and de-aired until the upper layer UL has reached the desired thickness, e. g. 3-7 mm. In one embodiment, the upper layer UL may also extend up the sidewalls of the mold already covered by the bottom layer BL (not shown in Fig. 2d).

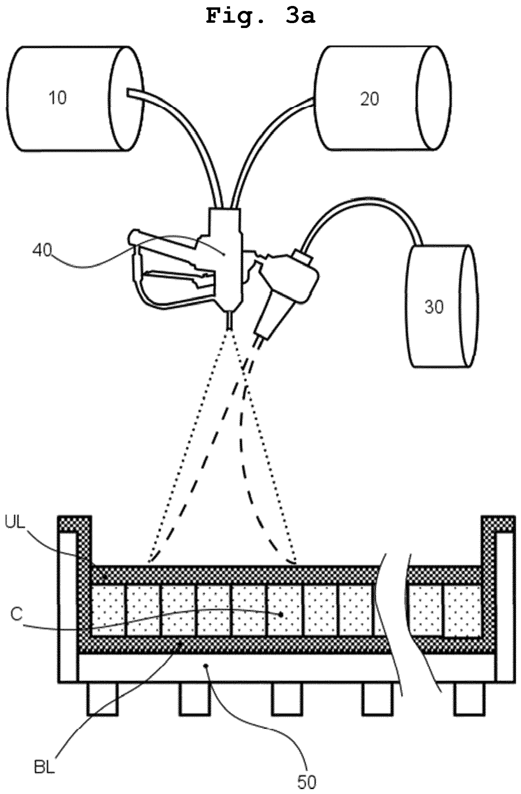

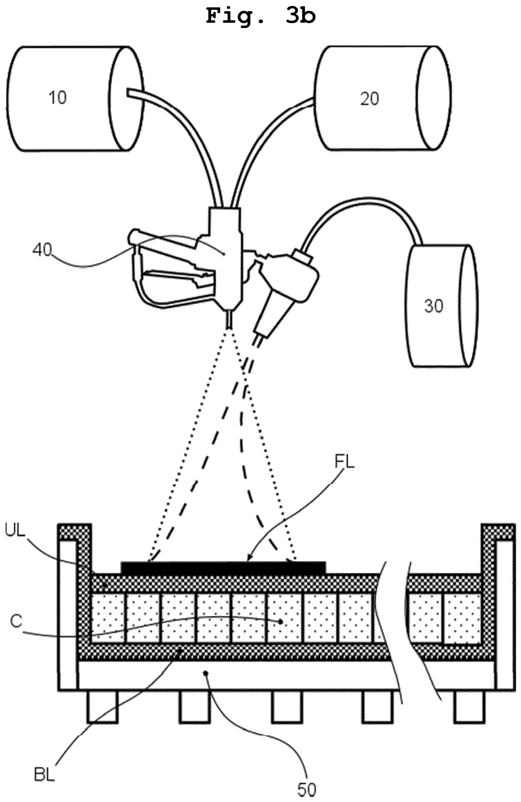

Lastly, a fire retardant layer FL is applied on top of the existing composite structure (see Fig. 2e). This fire retardant layer FL may be a layer that is formed by the method of forming a fire-retardant layer of a floating roof for tanks of the present invention, the method comprising applying a mixture prepared from a set of components comprising the following components A (10), B (20) and C (30), as shown in an illustrative embodiment in Fig. 3a and 3b.

The floating roof of the present invention thus generally has a laminate (or sandwich) structure comprising at least a bottom layer (BL) oriented towards the storage space, i.e. the space that is intended to receive or contain a liquid be stored, a core (C), and an upper layer oriented towards the space opposite the storage space (see Figure 1). The bottom layer typically extends around the side walls of the roof. In one embodiment of the invention the bottom layer is flexible enough to be folded when the floating roof is moved to a higher position. In another, more preferred embodiment, a gasket is provided to equilibrate the effects of bumps or bulges, i.e. geometrical unevennesses.

Each of these elements and how they can be obtained will be described below in more detail.

Generally, a floating roof is built by first of all forming a mold inside a tank housing. The mold is typically of preliminary nature and is built within the storage space. The mold may be made from e.g. wood or steel, and may be treated with a release agent such as formwork release oil or another lubricating species, such as wax or a fatty acid composition, in order to ensure release from the bottom layer after the construction is finished. The mold is typically removed after the floating roof has reached its final structural strength and integrity, typically within 2 weeks after completion of the layer structure forming the floating roof.

### Bottom Layer (BL)

On the mold, there is provided the bottom layer (BL). The bottom layer is typically made from a fiber-reinforced resin material. Fibers are used to increase the rigidity and the durability of the floating roof. The resin is not particularly limited, but is typically a resin that is generally used for forming fiber-reinforced resin materials, such as an epoxy resin, an unsaturated polyester resin or a vinyl ester resin, with a vinyl ester resin being preferred.

In order to render the bottom layer electrically conductive to avoid static charge and potential spark formation that may cause ignition of the stored liquid, an additive such as graphite can be added in an amount of up to 10% by weight, relative to the total weight of the composition forming the bottom layer. Herein, the additive may be added in suitable in order to ensure a volume resistivity of the bottom layer of 10⁴ Ω cm or less. Incidentally, such an additive can also be added in the same amounts to the upper layer to be described later, such as to set the volume resistivity to 10⁴ Ω cm or less.

In the conventional way of forming such a bottom layer from a fiber reinforced resin material, mats of fiber material are placed on the mold in a partially overlapping manner, i.e. such that the edges of the fiber mats overlap. Then, the fiber mats are impregnated with the resin material by e.g. spraying or coating the mats with a resin material that may include typical additives such as a crosslinker or a solvent. Due to the presence of areas wherein the fiber mats overlap and wherein the fiber mats do not overlap, the distribution of fibers and resin material is not uniform within the layer, i.e. along the x-y plane forming the layer plane. This causes local differences in the structure and may also lead to "bumps" at the areas were two or more fiber mats overlap. The upper surface of the bottom layer (i.e. the surface that is not in contact with the mold and that is oriented away from the storage space) may thus be irregular and bumpy. Also, due to the inhomogeneous distribution of fibers and resin material, the layer may exhibit different thermal expansion coefficients between areas wherein two or more fiber mats overlap and the areas wherein only one fiber mat is present. This will cause fatigue wear over time and a large number of hot/cold cycles such as caused by day/night cycles and changes in season, and may ultimately lead to cracks in the layer, causing structural failure and reducing the lifetime of the floating roof. Also, the surface irregularities (or "bumps") can lead to gaps between the bottom layer and the neighboring element, such as the core. These gaps may then open a potential for evaporative losses of the stored liquid.

In one aspect of the present invention, the bottom layer is made such as to have uniform distribution of fibers and resin component(s). Herein, the term "uniform distribution" means that the relative content of fibers and resin component(s) is about the same throughout the entire layer, and that essentially no local variations of e.g. the fiber content (as in the case of overlapping fiber mats) occur. Such a uniform distribution can be assessed by analyzing samples of the cross-section of the entire layer, cut along the z-axis and extending over the longest length of the x or y axis, and each cut to 10 cm, and assessing the number of visible fibers in each of the samples using e.g. a microscope. A "uniform distribution" is then given if the number of visible fibers in 90% or more of all samples, preferably 95% or more, such as 100% of all samples, varies around the mathematical average over all samples by 30% or less, preferably 25% or less, more preferably 20% or less, such as 15% or less. For example, a uniform distribution varying by 30% of the average mean for 90% of the samples is given if the average number of visible fibers in all samples is 200, and 90% of all samples have a number of fibers from 140 and 260.

This can be achieved by employing a manufacturing method that according to the information available to the present inventors has never been utilized for the formation of a reinforced resin material, namely by applying the reinforcing fibers and the resin material simultaneously. This can be achieved by spraying a resin composition and mixing it with reinforcing fibers, either manually or by using a an application device such as a chopper gun, such as the Graco RS™ Chop Gun commercially available from Graco Inc.(US) . Herein, a strand of reinforcing fibers, also known as chopper gun roving, is fed to a means for chopping (cutting) the fibers, e.g. to a length of about 1 to 3 cm. The cut fibers are then fed to stream of resin material typically containing a curing agent or catalyst to form a layer of randomly oriented fibers and resin material that substantially encloses the fibers. As the material is semi-liquid, it distributes evenly on the surface on which it is applies, e.g. the mold, thereby forming a continuous layer of resin and reinforcing fibers wherein the fibers are uniformly distributed.

This allows obtaining homogeneous distribution of the fibers and the resin material, avoiding the formation of areas that are weak spots or that can cause defects during extended use, as outlined above. Also, the resulting bottom layer has a uniform thickness and an even surface (i.e. no "bumps"), so that the neighboring layer can be fitted with little or no airspace between, thereby minimizing the risk of evaporative losses. Herein, the term "uniform thickness" shall express that the thickness of the layer determined at 50 positions evenly distributed over the layer area in x-y direction, is the same within a margin of +/- 5 mm, preferably +/- 2 mm.

The bottom layer is typically formed with a thickness that provides sufficient strength to the floating roof. The thickness thus also depends on the strength (thickness, tex) of the fibers, the resin employed, the amount of additives such as graphite, etc., but is typically 1 mm or more, such as 3 mm or 5 mm or more The thickness is preferably 5- 50 mm , preferably 5- 30 mm or 5- 25 mm.

The reinforcing fibers present in the bottom layer are not particularly limited, but can be chosen from carbon fibers, glass fibers, ceramic fibers and mineral fibers, such as glass fibers or basalt fibers. Preferably, the reinforcing fibers present in the bottom layer is an inorganic fiber, i.e. is not a carbon fiber.

Besides the chemical nature of the fibers and the resin, their relative content determines the strength and flexibility of the resulting layer. Preferably, the content of reinforcing fibers is from 5 to 50 % by weight, such as from 15 - 45 % by weight, e.g. from 20 to 40% by weight, relative to the total weight of the bottom layer. The remainder is then formed by resin and optionally additive such as graphite in an amount of up to 20 % by weight, in other embodiments up to 1% by weight relative to the total weight of the bottom layer.

### Core (C)

The core (C) is typically formed from a resin material that is lightweight yet has some structural integrity, such as a foamed material.

Conventionally, i.e. in the case where the bottom layer below the core was formed from overlapping fiber mats such as to have a non-uniform distribution of fibers and other components and causing the formation of "bumps" it was necessary to use a relatively soft material, such as a PE (polyethylene) foam. Other attempts use a PP (polypropylene) honeycomb structure. These requires the use of raw materials from fossil sources, and also requires a significant thickness of the core to provide for structural integrity.

By virtue of the embodiment of the present invention utilizing a bottom layer having a uniform distribution of reinforcing fibers and resin components without causing such "bumps", it is possible not only to avoid the formation of gaps between the core and the bottom layer below the core, but also to use a material that can be derived from recycling material, such as PET (poly ethylene terephthalate) recycled from plastic bottles.

In one embodiment of the present invention, the core is thus made from a material comprising or consisting of PET. This material is preferably foamed, such as to achieve a material having a nominal density according to ISO 845 of 100 to 500 kg/m³, preferably 150 to 400 kg/m³, such as 240 to 350 kg/m³. The material of the core has in one embodiment a compressive strength according to ISO 844 of 1.0 to 8.0 N/mm², such as from 1.5 to 4.0 N/mm². Suitable PET foamed materials are commercially available.

The construction of the core is typically achieved by providing the core material in suitable form, such as in the form of panels, e.g. comprising PET foam, on the hardened bottom layer. The core material may be provided directly on the hardened bottom layer, but an intervening woven or nonwoven material (also called veil) may be present. The veil may optionally be impregnated with a resin material. The veil is typically made from an inorganic or organic fibrous material and may be present between the bottom layer and the core. The veil may also be placed on the bottom layer prior to complete hardening thereof, such as to achieve high bonding strength of the veil to the bottom layer. Note that such a veil may additionally or alternatively be provided on top of the mold prior to formation of the bottom layer, such as to avoid contact of the stored liquid with the reinforcing fibers.

Elements of the core material, e.g. panels, may be placed in a desired pattern, such as in staggered formation. If desired, the elements may be bound to be each other, for instance using an adhesive. Such a staggered formation facilitates to distribute forces acting on the floating roof structure.

The thickness of the core layer (in z-direction) is typically 1 cm or more, such as 2 cm or more, 3 cm or more, 4 cm or more or 5 cm or more, in a preferred embodiment 6 cm but typically 40 cm or less, such as 30 cm or less, 25 cm or less or 20 cm or less, e.g. 10 cm or less, preferably 6 cm.

### Upper Layer

The upper layer is formed of a fiber reinforced resin material, and in this respect reference can be made to the above description of the bottom layer, including embodiments and preferred aspects thereof.

In one embodiment, the upper layer is formed directly on the core, but an in another embodiment, an intervening element, such as a veil as described above, is provided directly on the core prior to the formation of the upper layer. In the latter embodiment, the upper layer may be formed directly on said intervening element.

### Optional Top Layer

On the upper layer, a top layer may be provided in order to improve the aesthetical impression (i.e. using silicate paint), or in order to provide a fire retardant or fire-resistant top layer (or coating). This top layer may also be electrically conducting by addition of suitable additives, such as graphite. The optional top layer may be any top layer convention in the art.

However, in a preferred aspect of the present invention, the optional top layer is present and is a layer which is fire-retardant and is obtained by the method of forming a fire-retardant layer of a floating roof for tanks, which is another aspect of the present invention. Notably, the method for forming a fire-retardant layer of a floating roof for tanks for said other aspect of the present invention can also be applied to floating roof constructions other than described above, e.g. floating roof constructions not having the sandwich structure of bottom layer, core and upper layer, or not comprising PET.

After completion of the formation of the upper layer and optionally the top layer, the mold inside the tank is deconstructed. After the mold is removed, the floating roof structure may be placed on support columns made e.g. from steel or aluminum. Optionally, the floating roof may then be completely cured by heating, wherein preferably the heating is carried out until the floating roof structure has reached a temperature of at least about 90°C, but generally 160 °C or less. The heating cures the structure and ensures a sufficient bonding of the layers. Most preferably the heating is carried out by filling the tank with steam. Using steam to heat the floating roof structure ensures an even distribution of heat while also ensuring that the temperature does not reach levels detrimental to the used materials.

The method for forming a fire retardant layer of a floating roof for tanks according to another aspect of the present invention comprises the step of applying a mixture prepared form a set of components comprising the components A, B and C on a substrate surface. Here, the "substrate surface" is a surface of a component of a floating roof, and is typically the upper surface of a component of a floating roof construction that forms the uppermost surface except for the fire retardant layer. The substrate surface on which the mixture is applied may thus be the upper surface of a layer formed from a fiber reinforced material, such as the upper layer of the floating roof construction shown in Figure 1. The substrate may in one embodiment be the upper surface of the upper layer (UL) of the floating roof described above.

The components A, B and C will be described in more detail below. The mixture that is applied to the substrate surface comprises at least these three components, but may optionally comprise additional components. In one embodiment of the present invention, such additional components are absent.

The step of applying the mixture on a substrate surface may be conducted using any method conventional in the art, and the application may be effected by hand or machine-assisted. An application by hand may for instance make use of a spatula, a brush or the like. In this case, the mixture may also be prepared manually, i.e. by adding the components A, B and C to a mixing container, followed by thorough stirring.

Preferably, the step of mixing and applying the mixture of the components A, B and C (and possibly also other optional components) is performed simultaneously in an application device (40) that is per se known in the art, such as a chopper gun. Such an application device may comprise a container (30) for storing and feeding the inorganic fibers C having a desired length, and may comprise two or more inlets for feeding the components A (10), B (20) and possibly other components (see Figure 3). The components of the mixture are then mixed within the device (40) and the formed mixture is applied by the device, e.g. by spraying. To this end, the device may contain or may be connected to a corresponding pump (not shown), or may also eject the mixture by hydraulic pressure or by blowing air. Such devices are commercially available.

### Component A

Component A is an aqueous composition comprising water and one or more selected from inorganic salts and inorganic oxides, comprising at least one phosphate. Here, the terms "inorganic salts", "inorganic oxide" and "phosphate" include the pure salts and oxides, respectively, as well as hydrates thereof. Further, the term "phosphate" includes also the hydrogen phosphates, if applicable, such as sodium dihydrogen phosphate or dipotassium hydrogen phosphate.

In one embodiment, the phosphate present in component A is selected from alkaline phosphates, alkaline earth phosphates, and the corresponding hydrogen phosphates, and is preferably selected from the group consisting of sodium phosphate, monosodium dihydrogenphosphate, disodiummonohydrogenphosphate, potassium phosphate, monopotassiumdihydrogen phosphate, dipotassiummonohydrogenphosphate, calcium phosphate, calcium hydrogen phosphate, magnesium phosphate, magnesium hydrogen phosphate, and combinations thereof.

In one embodiment of the present invention, the content of the at least one phosphate in component A may be 20wt% or more, such as 25wt% or more, or 30wt% or more. The upper limit is not particularly limited, but may e.g. be 75wt% or less, such as 70wt% or less. These ranges apply to the total of phosphates in case a mixture of more than one phosphate is employed.

While the presence of water and a phosphate is sufficient for satisfying the requirements of component A with respect to the presence of salts or oxides, typically further species selected from inorganic salts and inorganic oxides are present beside the at least one phosphate. The respective species that is present in addition may be selection form inorganic salts other than phosphates and inorganic oxides without any limitation, but typically at least one inorganic oxide is present in addition. These may for instance be selected from the group consisting of silicon oxide, aluminum oxide, aluminum silicates, titanium oxide, sodium oxide, potassium oxide, and others. Further specific examples include kaolin, vermiculite and perlite.

One or two or three or four or more of these may be used together with the at least one phosphate. For instance, besides the at least one phosphate, component A may further comprise one, two, three or more selected from silicon oxide, kaolin, vermiculite and perlite.

In one embodiment, the aqueous composition of Component A does not contain any other inorganic salts besides the phosphate, such as chlorides or nitrates. In this case, composition A may comprise or consist of water, one or more phosphates, and one or more oxides or oxidic minerals, the latter including besides silicon oxides and aluminum oxides also minerals such as kaolin, vermiculite and perlite.

The amounts of inorganic salts and inorganic oxides other than phosphate(s) in component A is not particularly limited, but is generally in the range of 60wt% or less of the total weight of the composition A, such as 40wt% or less or 20wt% or less, relative to the total weight of component A. The lower limit is not particularly limited and may be 0, in which case no inorganic salts other than phosphates or inorganic oxides are present, but can also be 1wt%, 2wt%, 5wt%, or 10wt%, relative to the total weight of component A.

Besides the at least one phosphate, and optionally other inorganic salts or oxides, the component A may optionally comprise further additives in an amount of up to 10wt% (relative to the total weight of the composition), such a 5wt% or less, but these are optional and may also be absent. Such optional additives may for instance include dispersing aids such as sodium acrylate polymers, rheology modifiers such as xanthan gum, pH adjusting agents such as phosphoric acid, surface active agents like modified sugars, thickeners such as hydroxyethyl cellulose, etc. These optional additives may be of organic or inorganic nature. However, in view of the aim of the coating providing a fire retardant barrier, it is preferred that the amount of organic components is preferably 10wt% or less, such as 5wt% or less, or 2 wt% or less, relative to the total weight of component A, and preferably organic components are completely absent. Herein, the term "organic components" denotes any substance having a carbon-hydrogen bond.

Besides the inorganic salts and oxides, the component A further comprises water. Preferably, water is the sole solvent, and no organic solvent is present. The amount of water is typically within the range of 10-60wt%, such as from 15-50wt%, relative to the total weight of the composition.

The aqueous composition forming the component A furthermore has a pH at 20°C of from 1.0-6.5, thereby ensuring that a neutralization reaction is affected upon mixing with component B to be described later. The upper limit of the pH for component A can thus be 6.5 or lower, but can also be 6.0, 5.5, 5.5 or 4.5 or lower. A lower pH ensures that a sufficient exothermic neutralization reaction is effected upon mixing with component B, and also ensures that a substantial part of the phosphate anions are present as phosphate (PO₄³⁻) or hydrogen phosphate (HPO₄²⁻) anions. Without wishing to be bound by theory, these are believed to be of importance for forming the rigid structure of the fire retardant coating obtained after mixing with components B and C.

The lower limit of the pH is not particularly limited but in order to avoid corrosion of instruments and also reduce potential hazards, the pH is typically 1.0 or higher, such as 1.5 or higher or 2.0 or higher. The pH can be adjusted by adding pH adjusting agents, but is in one embodiment the pH that is naturally obtained by mixing the at least one phosphate, water and optional other components, such as at least one oxide, e.g. silicon oxide and kaolin or vermiculite

Component A may be in the form of an aqueous suspension or slurry. Herein, the average particle size of the suspended particles is preferably adjusted to allow proper pumping and handling, and also to allow sufficient reactivity with component A. Hence, in case component A is a slurry or suspension, the particle diameter of the suspended particles is preferably small, such as 5 µm or less, e.g. 2 µm or less or 1 µm or less. This can be ensured by using starting materials having a suitable particle size, which are commercially available. Further, it is preferred that component A is thoroughly mixed (e.g. by stirring) before mixed with components B and C.

### Component B

The component B used in the method of the present invention is an aqueous composition comprising water and one or more selected from inorganic salts, inorganic oxides and inorganic hydroxides comprising at least one of earth alkaline oxides and earth alkaline hydroxides. The aqueous composition of component B has a pH of from 7.5-14.0.

Compared to component A, component B thus does not need to contain a phosphate, but essentially comprises an oxide or hydroxide of an at least one earth alkaline metal such as magnesium and/or calcium. In one embodiment, component B comprises an oxide or hydroxide of magnesium. In another embodiment, component B comprises an oxide or hydroxide of calcium. In one embodiment, the earth alkaline oxide or hydroxide in the aqueous composition B can be selected from calcium oxide, calcium hydroxide, magnesium oxide, magnesium hydroxide and combinations thereof.

The content of the at least one of an oxide or hydroxide of an at least one earth alkaline metal is not particularly limited, but is preferably not too low in order to allow the formation of substantial amounts of the fire retardant layer by application of components A, B, and C. Hence, the content of the t least one of an oxide or hydroxide of an at least one earth alkaline metal in component B is typically 20% by weight or more, such as 25% by weight or more or 30% by weight or more, e. g. 40% by weight or more. The upper limit is generally determined mainly by the processability of the component, and is hence typically 85% by weight or less, such as 80% by weight or less or 75% by weight or less. Note that upon contact with water, the oxides may be partially or fully hydrolyzed to form the respective hydroxides, so that the above content ranges are expressed in relation to the hydroxides. This means that for instance in the case of MgO, the respective content thereof is converted to the amount of Mg(OH)₂ assuming complete hydrolysis, and the calculated amount of Mg(OH)₂ then should be within the above ranges.

Besides the at least one of earth alkaline oxides and earth alkaline hydroxides, component B may contain further inorganic salts, oxides or hydroxides, also including phosphates. As one example, component B may comprise 1, 2, 3, 4, or 5 or more selected form the group consisting of silicon oxide, aluminum oxide, aluminum hydroxide, aluminum silicate, titanium oxide, titanium hydroxide, sodium oxide, sodium hydroxide, potassium oxide, potassium hydroxide, sodium phosphate, disodium hydrogen phosphate, sodium dehydrate phosphate, potassium phosphate, dipotassium hydrogen phosphate and potassium dihydrogen phosphate. As one example, component B may comprise silicon oxide and titanium oxide in addition to the at least one of earth alkaline hydroxides and earth alkaline oxides.

If an additional salt, oxide or hydroxide besides the at least one of earth alkaline hydroxides and earth alkaline oxides is present in component B, the amount thereof is not particularly limited, but is typically 30wt% or less, such as 25wt% or less, or 20wt% or less. The lower limit is not particularly limited in that such species may also be completely absent, but can be 1% or higher, 2% or higher, 5% or higher, or 10% or higher, all by rate relative to the total weight of component B. In one embodiment, component B does not include a salt other than phosphates, i.e. consists of water, the at least one of earth alkaline hydroxides and earth alkaline oxides, optionally phosphates, and optionally other oxides or hydroxides. In one embodiment, component B may thus consist of or consist essentially of water, the at least one of earth alkaline oxides and the earth alkaline hydroxides, and optionally further inorganic oxides, such as silicon oxide, titanium oxide and/or aluminum silicate.

Component B may also comprise the optional additives as described above for Component A. Such optional additives may for instance include dispersing aids such as sodium acrylate polymers, rheology modifiers such as xanthan gum, pH adjusting agents such as phosphoric acid, surface active agents like modified sugars, thickeners such as hydroxyethyl cellulose, etc. These optional additives may be of organic or inorganic nature. However, in view of the aim of the coating providing a fire retardant barrier, it is preferred that the amount of organic components is preferably 10wt% or less, such as 5wt% or less, or 2 wt% or less, relative to the total weight of component B, and preferably organic components are completely absent. Herein, the term "organic components" denotes any substance having a carbon-hydrogen bond.

### Component C

Component C is selected from inorganic fibers, such as glass fibers, ceramic fibers, and mineral fibers. The fibers serve to reinforce the layer formed form the mixture of components A or B or C (or rather a reaction product thereof), and to this end any type of inorganic fiber that is conventionally used as reinforcing material can be also employed as component C of the present invention.

In order provide sufficient strength, the fibers are preferably not too thin. In one embodiment the fibers thus have a tex of 800 or more, such as 1000 or more or 1500 or more, or even 1750 or more. The upper limit is not particularly limited, but is typically 4000 or less, such as 3500 or less, or 3000 or less. For example, the fibers can be glass fibers have a tex of 2200-2600. Herein, the term "tex" denotes the weight of a fiber in g/km, and this can be determined according to any method conventional in the art, such as ISO-DIS-13922-2000. However, also other methods can be used. One should note that the tex value referred to in the present application relates to the fiber only, i.e. without any binder, resin (sizing) or similar.

The inorganic fibers C are preferably glass fibers, as glass fibers provide for structural strength at low costs. In one embodiment, the inorganic fibers are not glass fibers, but selected from other ceramic fibers and mineral fibers, such as basalt fibers. The fibers preferably a provided to the mixing with a length of about 1 to 3 cm.

The inorganic fibers can be supplemented in the form of continuous strand, e.g. as roving. This allows e.g. storage in a hand-held application device known as "chopper gun", where the component C is then mixed with the components A and B, and the resulting mixture is applied to the substrate.

### Mixing and Application

The components A, B and C are mixed and applied to a substrate. Herein, preferably the substrate is part of a (partial) floating roof construction of a tank, and the mixing and application is performed at the site of construction, i.e. within the tank.

Prior to the application of the mixture prepared form components A , B and C, the substrate may be pre-treated by dispersing silicon oxide on its surface onto which subsequently the mixture of components A, B and C is applied. This is believed to ensure proper adhesion and binding of the mixture of components A, B and C (or its reaction product) to the underlying substrate.

The relative amount of the inorganic fibers is not particularly limited, but is generally chosen such as to obtain a sufficient reinforcing effect. As such, the amount of inorganic fibers supplied to the mixture of the components A, B and C is generally 40wt% or less, such as 35wt% or less, or 30wt% or even 25% by weight or less, yet is typically 5wt% or more, such as 10wt% or more. Herein, the amount of the fibers relates to the amount relative to the overall mixture of the components A, B and C and any optional component that may be added thereto (which is preferably absent).

While the component C may be supplied in the form of cut fibers from an application device such as a chopper gun, it may also be simply mixed with the other components A and B. Incidentally, components A and B may be supplied from containers known in the art, such as in metal or plastic containers. As outlined above, if a hand-held application device such as a chopper gun is used, components A and B may be supplied to the hand-held application device via corresponding supply lines, and the fibers C may be provided as a roving that is stored within the application device or supplied from externally.

The relative mixing ratio of components A and B is not particular limited, but is typically in the range of about 0.5:2 to 2:0.5, preferably about 1:2 to 2:1, more preferably about 1.5:2 to 2:1.5, such as about 1:1, expressed as weight ratio of A:B.

Without wishing to be bound by theory, it is believed that upon mixing of the components A and B, an exothermic reaction takes place that involves the neutralization of the respective components, and that also a crystalline and/or amorphous network is of phosphates and oxides and/or hydroxides is formed. This network is strengthened and reinforced by mixing the fibers of Component C.

Given that the phosphate present in component A and the earth alkaline hydroxide or oxide present in component B are believed to react in this way, a durable and strong coating can be formed in combination with the inorganic fibers (component C). Further, tests performed by the inventors have shown that the resulting coating exhibits excellent fire-retardant properties that allows in certain jurisdiction for providing only local firefighting equipment, and that the fire-retardant layer has high hardness and strength allowing maintenance personal and even vehicles to operate on the fire-retardant layer without damages or risk of collapse of the structure.

## Claims

1. Method of forming a fire-retardant top layer (FL) of a floating roof for tanks, the method comprising applying a mixture prepared from a set of components comprising the following components A, B and C on a substrate surface:
A a first aqueous composition (10) comprising water and one or more selected from inorganic salts and inorganic oxides comprising one or more phosphate(s), the first aqueous composition having a pH at 20°C of from 1.0 to 6.5;
B a second aqueous composition (20) comprising water and one or more selected from inorganic salts, inorganic oxides and inorganic hydroxides comprising at least one of an alkaline or earth alkaline oxide and an alkaline or earth alkaline hydroxide, the second aqueous composition having a pH at 20°C of from 7.5 to 14.0; and
C inorganic fibers (30).

2. Method according to claim 1, wherein the aqueous compositions A and/or B has/have a water content from 10 to 60 % by weight, relative to the total weight of the respective composition, such as from 15 - 50% by weight.

3. Method according to claim 1 and/or 2, wherein the amount of the one or more phosphate(s) present in the aqueous composition of Component A is 20% by weight or more, relative to the total weight of the respective composition; and/or wherein the amount of the at least one of an earth alkaline oxide and an earth alkaline hydroxide present in the aqueous composition B is 20% by weight or more, relative to the total weight of the respective composition.

4. Method according to any one of claims 1 to 3, wherein the composition A comprises, besides the one or more phosphate(s), one or more of inorganic salts and inorganic oxides other than phosphates; and/or wherein the composition B comprises, besides the at least one of an earth alkaline oxide and an earth alkaline hydroxide, one or more of inorganic salts, inorganic oxides or inorganic hydroxides other than an earth alkaline oxide and an earth alkaline hydroxide.

5. Method according to anyone of claims 1 to 4, wherein the one or more of inorganic salts and inorganic oxides other than the one or more phosphate(s) present in composition A and/or the one or more of inorganic salts, inorganic oxides or inorganic hydroxides other than an earth alkaline oxide and an earth alkaline hydroxide present in composition B is/are present in an amount of 5 to 25 % by weight, relative to the total weight of the composition A or B, respectively.

6. Method according to any one of claims 1 to 7, wherein the inorganic fibers C are selected from glass fibers, ceramic fibers and mineral fibers having a tex of up to 3000 g/km.

7. Method according to any one of claims 1 to 6, wherein the amount of the inorganic fibers C is 5 to 25% by weight, relative to the total weight of A, B and C.

8. Method according to any one of claims 1 to 7, wherein the substrate surface on which the mixture is applied includes silicon oxide, preferably in particulate form.

9. Method according to any one of claims 1 to 8, wherein the substrate is formed from a fiber-reinforced material comprising an organic resin, such as a vinyl ester resin, a polyester resin or an epoxy resin.

10. Method according to any one of claims 1 to 9, wherein the mixture is prepared by mixing the components A and B in a weight ratio of A:B within the range of about 0.5:2 to 2:0.5, preferably about 1:2 to 2:1, more preferably about 1.5:2 to 2:1.5, such as about 1:1, and/or wherein the mixture is prepared such that the content of inorganic fibers C in the mixture is from 5 - 25% by weight, relative to the total weight of the mixture.

11. Floating roof for tanks with a fire-retardant top layer obtainable by the method according to any one of claims 1 to 10.

12. Use of a set of components comprising the components A, B and C as defined in any one of claims 1 to 11 for forming a fire-retardant top layer of a floating roof for tanks.

13. Floating roof for tanks comprising a fire-retardant top layer (FL) which comprises a mixture or a reaction product of
a. one or more selected from inorganic salts and inorganic oxides comprising one or more phosphate(s);
b. one or more selected from inorganic salts, inorganic oxides and inorganic hydroxides comprising at least one of an earth alkaline oxide and an earth alkaline hydroxide;
c. inorganic fibers.

14. Floating roof according to claim 13, wherein the floating roof is an external or an internal floating roof.

15. Floating roof tank comprising a floating roof according to any one of claims 11 and 13 to 14

16. Method of producing a floating roof of a floating roof tank, the method comprising, in this order,
iv. Forming a mold inside a tank housing,
v. Forming at least a bottom layer (BL), a core (C) and an upper layer (UL) to form a sandwich structure; and
vi. Forming a fire-retardant top layer (FL) on the upper layer according to the method of any one claims 1 to 10.

17. Method according to claim 16, wherein the bottom layer (BL) is formed from a fiber-reinforced resin composition having a uniform distribution of fibers and resin components and/ or has a uniform thickness.

18. Method according to claim 17, wherein the formation of the bottom layer (BL) includes applying a composition including a resin component, preferably a vinyl ester resin component, and reinforcing fibers using an application device comprising or connected to a reservoir for the resin and for fiber material, respectively, and wherein optionally the fiber length of the fiber material present in the applied composition ranges from approximately 1 cm up to approximately 3 cm, and wherein the application is preferably conducted using a chopper gun.

19. Floating roof for storage tanks for liquid, the floating roof structure comprising a bottom layer (BL), a core (C), and an upper layer (UL) arranged in a sandwich structure, **characterized in that** the bottom layer (BL) is made from a fiber reinforced resin material having a uniform distribution of fibers and resin material and/or a uniform thickness.

20. Floating roof for storage tanks for liquids according to claim 19, wherein the upper layer (UL) is made from a fiber reinforced resin material having a uniform thickness and/or a uniform distribution of fibers and resin material and wherein the fiber reinforced resin material is a vinyl ester resin.

21. Floating roof for storage tanks for liquids according to claim 19 and/or 20, wherein the core (C) comprises or consists of polyethylene terephthalate, which is optionally in the form of a foam.

22. Floating roof according to any of claim 19 to 21, wherein the bottom layer (BL) and/or the upper layer (UL) have a content of reinforcement fibers from 5 to 50 % by weight, relative to the total weight of the respective composition, preferably wherein the bottom layer (BL) and the upper layer (UL) have a content of reinforcement fibers from 30 to 40% by weight, relative to the total weight of the respective composition.

23. Floating roof according to any one of claims 19 to 22, wherein the floating roof comprises a fire-retardant top layer (FL), and wherein the fire-retardant top layer (FL) is obtainable by the method of any one of claims 1 to 10.
